# EUROPEAN PATENT APPLICATION

(11) **EP 1 560 452 A2**
(43) Date of publication of application: **03.08.2005**
(21) Application number: 05001814.2
(22) Date of filing: 28.01.2005
(51) Int. Cl.: H04Q 7/38, H04L 12/56

(54) **Method of efficiently transmitting data during a handover in a wideband radio access network**

(30) Priority: 28.01.2004 KR 2004005358
(71) Applicant: Samsung Electronics Co., Ltd., Suwon-si, Gyeonggi-do (KR); Yonsei University, Seoul (KR)
(72) Inventor: Do, Mi-Sun c/o Samsung Electronics Co., Ltd., Suwon-si Gyeonggi-do (KR); Kim, Yung-Soo c/o Samsung Electronics Co., Ltd., Suwon-si Gyeonggi-do (KR); Yun, Sang-Boh c/o Samsung Electronics Co., Ltd., Suwon-si Gyeonggi-do (KR); Cho, Sung-Hyun c/o Samsung Electronics Co., Ltd., Suwon-si Gyeonggi-do (KR); Lee, Sang-Hoon c/oDpt.Electr.Engine.&Comp. Science, Seoul (KR); Park, Won-Hyoung c/o Samsung Electronics Co., Ltd., Suwon-si Gyeonggi-do (KR)
(74) Representative: Grünecker, Kinkeldey, Stockmair & Schwanhäusser Anwaltssozietät

(57) **Abstract**

A wideband radio access network system in which a predetermined mobile node (MN) is wirelessly connected to a core network (CN) through a first intermediate router (IR) and a second IR neighboring the first IR is tunneled to the first IR, to transmit data from the MN to the CN through at least one IR. The MN transmits data to the first and second IRs, and if at least one IR receives the data normally, the at least one IR transmits the received data to the CN through the first IR.

## Description

The present invention relates generally to a wideband radio access network, and in particular, to a method of transmitting and receiving data efficiently during a handover in a mobile station (MS).

Since the introduction of a cellular mobile telecommunication system in the late 1970's in the U.S., Korea started a voice communication service in a 1^{st} generation (1G) analog mobile telecommunication system, AMPS (Advanced Mobile Phone Service), developed a 2^{nd} generation (2G) mobile telecommunication system and commercialized it in the mid 1990's, and partially deployed a 3^{rd} generation (3G) mobile telecommunication system, IMT-2000 (International Mobile Telecommunication-2000), which aims at advanced wireless multimedia and highspeed data service in the late 1990's.

Now, the mobile telecommunication technology is transitioning from the 3G mobile telecommunication system to a 4^{th} generation (4G) mobile telecommunication system. The 4G mobile telecommunication system seeks efficient interworking and integration between a wired communication network and a wireless communication network, beyond providing simple wireless communication service as provided in the existing mobile telecommunication systems. Accordingly, technology for providing higher-speed data transmission service than in the 3G mobile telecommunication system is currently being standardized.

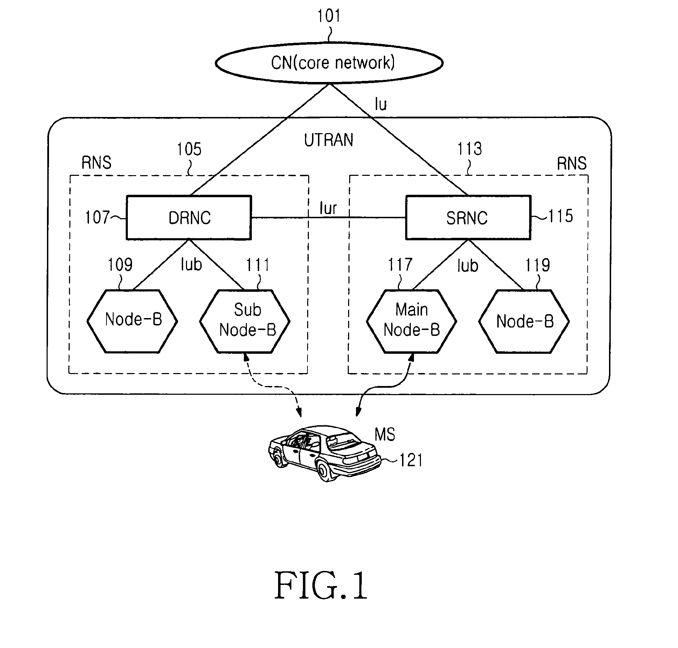

FIG. 1 illustrates a network configuration in a typical 3G mobile communication system. More specifically, FIG. 1 illustrates a network for an asynchronous 3G mobile communication system, i.e., a UMTS (Universal Mobile Telecommunication System).

Referring to FIG. 1, the UMTS system comprises a core network (CN) 101, a plurality of radio network subsystems (RNSs) 105 and 113, and an MS 121. The MS 121 is called UE in the UMTS system.

The CN 101 manages information about the MS 121 and performs mobility management, session management, and call management. Each of the RNSs 105 and 113 includes a radio network controller (RNC) and a plurality of Node Bs. For example, the RNS 113 includes an RNC 107 and Node Bs 109 and 111, while the RNC 113 includes an RNC 115 and Node Bs 117 and 119. Although two Node Bs belong to one RNC in the illustrated case, it is obvious that more Node Bs can be and normally are connected to an RNC in real implementation.

The RNCs 107 and 115 are classified into a serving RNC (SRNC), a drift RNC (DRNC), or a controlling RNC (CRNC) according to their operations. The SRNC 115 is an RNC that manages information about each MS within its coverage and transmits/receives data to/from the CN 101 through an lub interface. The DRNC 107 is an RNC through which data for an MS is transmitted/received to/from the CN 101 rather than through the SRNC 115. The CRNC is an RCN that controls each Node B. Assuming that the RNC 115 manages information about the MS 121 in the case illustrated in FIG. 1, the RNC 115 works as an SRNC for the MS 121. As the MS 121 moves and data for the MS 121 is transmitted/received through the RNC 115, the RNC 115 operates as a DRNC for the MS 121. Information and data is communicated between the MS 121 and the CN 101 through the SRNC 115.

Each Node B controls a connection through an air interface, and each RNC is connected to a plurality of Node Bs and effectively controls radio channel resources for MSs. The RNC interworks with the MSs in layer 2 from a protocol's perspective. Accordingly, the RNC ensures mobility for the MSs, controls handover, and manages radio resources.

Each MS selects a Node B that will provide a good channel condition and when the MS moves from one cell to another, the Node B supports the handover for the MS. If the MS moves to another cell, connected to an RNC, the radio network determines how the handover is implemented.

To ensure an active connection between access networks along with the mobility of the MS 121, the MS 121 establishes a connection with a sub Node B 111 in advance so that when a connection between the MS 121 and a serving main Node B 117 is released, data transmission continues through the sub Node B 111. Consequently, the mobility and quality of service (QoS) are ensured in the access networks. This is called handover. If the sub Node B 111 is connected to another RNC, this RNC is a DRNC for the MS 121.

For uplink data transmission in the handover, the MS 121 simultaneously transmits data to both the main Node B 117 and the sub Node B 111. The SRNC 115 selectively processes the data, thereby ensuring active uplink data transmission. For downlink data transmission in the handover, both the main node B 117 and the sub Node B 111 simultaneously transmit data to the MS 121 such that despite possible transmission errors from the main Node B 117, data transmission/reception continues. This technique is called a soft handover.

In another handover technique, the MS 121 is connected to a pair of main RNCs and a pair of Node Bs. A sub Node B and a sub RNC are in a waiting state, for MS mobility. If a channel connected between the MS 121 and the sub Node B is better than that between the MS 121 and the main Node B, the sub Node B is designated as a new main Node B and data is transmitted to the new main Node B. Therefore, the MS 121 selects one Node B at some point in time and transmits data only to the selected Node B. This technique is called a hard handover.

In summary, the soft handover enables an MS to transmit/receive data to/from a plurality of Node Bs, whereas the hard handover confines the MS to one Node B for data transmission/reception at a certain point in time.

In the existing 3G mobile telecommunication technology, an RNC controls a plurality of Node Bs and a handover control algorithm is designed for implementation in the RNC. The RNC selects a Node B having the highest SNR (Signal-to-Noise Ratio) using a channel established between the RNC and an MS. That is, a handover algorithm works between the RNC and the MS to perform a handover by signaling between them. Therefore, the Node B serves as a bridge that delivers a signal from the RNC to the MS, in a nearer place to the MS.

The functionality of implementing layer 2 and layer 3 protocols is provided to an RNC in UMTS and to a BSC (Base Station Controller) in CDMA2000 in the conventional 3G network. The functionality includes handover control and retransmission in layer 2 (RLL: Radio Link Layer) due to transmission errors on radio channels.

In a handover under the control of the RNC, the MS usually selects a Node B that transmits a pilot signal of the highest SNR among Node Bs connected to the MS. For downlink and uplink transmission for the handover, the following functions are performed.

During a real-time service requiring a short transmission delay, the MS receives a packet through the selected Node B (a primary Node B) on the uplink and the RNC receives a packet through the primary Node B on the downlink. Because much time is taken for packet retransmission due to round trip delay in layer 2, even if a transmission error occurs in the packet, an ARQ (Automatic Retransmission request) cannot be performed.

However, a non-real-time service allows a more or less delay . Therefore, when a transmission error occurs, a retransmission is possible. In layer 2 (RLL), the RNC or MS requests a retransmission to the MS or RNC in the downlink or in the uplink. However, similarly to the real-time service, the retransmission involves a round trip delay for an MS-Node B-RNC connection and a long transmission delay is required.

To overcome the transmission delay, the Node B/MS requests a retransmission to the MS/Node B by HARQ (Hybrid ARQ) in layer 1 (physical layer). In practice, packet transmission occurs every 1.25msec in a 3GPP (3^{rd} Generation Partnership Project) 1xEV-DV (1xEVolution-Data and Voice) system. While this technology deals with retransmission for a selected Node B, a transmission scheme of an ARQ and a soft handover in combination is yet to be proposed.

Therefore, the present invention has been designed to substantially solve at least the above problems and/or disadvantages and to provide at least the advantages below.

It is the object of the present invention to provide a method of efficiently transmitting/receiving data during a handover in a wideband radio access network system.

This object is solved by the subject matter of the independent claims.

Preferred embodiments are defined in the dependent claims.

An aspect of the present invention is to provide a method of efficiently transmitting/receiving data by an ARQ during a handover in a wideband radio access network system.

The above is achieved by providing an efficient data transmitting method during a handover in a wideband radio access network.

According to an aspect of the present invention, in a wideband radio access network system where a predetermined MN is wirelessly connected to a CN through a first IR and a second IR neighboring to the first IR is tunneled to the first IR, to transmit data from the MN to the CN through at least one IR, the MN transmits data to the first and second IRs, and if at least one IR receives the data normally, the at least one IR transmits the received data to the CN through the first IR.

According to another aspect of the present invention, in a wideband radio access network system where a predetermined MN is wirelessly connected to a CN through a first IR and a second IR neighboring to the first IR is tunneled to the first IR, to transmit data from the CN to the MN through at least one IR, the CN transmits data to the first IR and the first IR transmits the data to the MN. The first IR forwards the data to the second IR and the second IR transmits the data to the MN.

According to a further aspect of the present invention, in a wideband radio access network system where a predetermined MN is wirelessly connected to a CN through a first IR and a second IR neighboring to the first IR is tunneled to the first IR, to transmit data from the CN to the MN through at least one IR, the MN measures channel conditions of the first and second IRs from signals received from the first and second IRs and reports the channel conditions to the first and second IRs. The CN transmits data to the first IR, the first IR forwards the data to the IR in the best channel, and the IR in the best channel transmits the data to the MN.

According to still another aspect of the present invention, in a wideband radio access network system where a predetermined MN is wirelessly connected to a CN through a first IR and a second IR neighboring to the first IR is tunneled to the first IR, to transmit data from the MN to the CN through at least one IR, the MN measures channel conditions of the first and second IRs from signals received from the first and second IRs and transmits data including information indicating an IR in the best channel condition to the first and second IRs.

The above object and other aspects, features, and advantages of the present invention will become more apparent from the following detailed description when taken in conjunction with the accompanying drawings in which:
FIG. 1 illustrates a network configuration in a conventional 3G mobile communication system;
FIG. 2 illustrates a handover procedure in a network configuration proposed by 4G mobile telecommunication technology;
FIG. 3 illustrates a procedure for selecting an intermediate router in an MS during a handover according to the present invention;
FIG. 4 illustrates an ARQ interworking between a physical layer and a MAC (Medium Access Control) layer according to the present invention;
FIG. 5 illustrates a procedure for uplink data transmission by an ARQ according to an embodiment of the present invention;
FIG. 6 illustrates a procedure for downlink data transmission by an ARQ according to another embodiment of the present invention;
FIG. 7 illustrates a procedure for downlink data transmission by an ARQ according to another embodiment of the present invention;
FIG. 8 illustrates a procedure for uplink data transmission without using an ARQ according to another embodiment of the present invention; and
FIG. 9 illustrates a procedure for downlink data transmission without using an ARQ according to another embodiment of the present invention.

Preferred embodiments of the present invention will be described in detail herein below with reference to the accompanying drawings. In the following description, well-known functions or constructions are not described in detail since they would obscure the invention in unnecessary detail.

The present invention proposes a method of increasing a data rate by effectively combining an ARQ with a soft handover, taking the advantage of a 4G system network, that is, a shorter round trip delay in layer 2 than in a 3G system network.

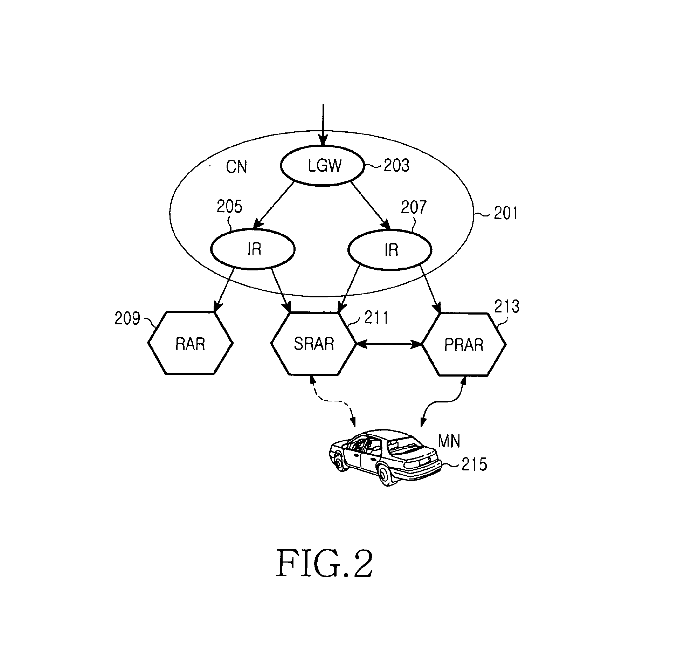

FIG. 2 illustrates a handover procedure in a network configuration proposed in 4G mobile telecommunication technology. Referring to FIG. 2, a CN 201, which is IP-based, includes intermediate routers (IRs) 205 and 207 and a local gateway (LGW) 203 therein, for supporting the mobility of a mobile node (MN) 215. The LGW 203 acts as a gateway connected to an external network, and the IRs 205 and 207 route between the CN 201 and other radio network sub-systems.

While a radio network sub-system, i.e., an RNS, is branched into an RNC and a Node B in the typical 3G system, the functionalities of the RNC and the Node B are integrated as an access network component called a radio access router (209, 211, or 213). In other words, the centralized access network structure on the RNC in the 3G network has evolved to a rather distributed network structure with functions distributed around an RAR (Radio Access Router). The MS or UE in the 3G system corresponds to the MN 215 in the 4G system.

As compared to the conventional 3G radio network, the 4G radio network controls handover, while the RARs 209, 211, and 213 directly communicate with the MN 215 on corresponding channels. The PRAR (Primary RAR) 213 is the counterpart of the SRNC in UMTS, and the SRAR (Secondary RAR) 211 is the counterpart of the DRNC in UMTS.

Therefore, the present invention provides methods of efficiently implementing hard handover and soft handover by an ARQ in a 4G wideband radio network. Also, the present invention proposes a soft handover scheme that enables data transmission/reception to continue without interruptions when an MN moves from one RAR to another RAR. Accordingly, the present invention presents handover techniques and good-performance algorithms for the 4G network.

Referring to FIG. 2, the RARs 209, 211, and 213 bridge between the MN 215 and the IP-based CN 201. As stated above, the RAR 213 currently communicating with the MN 215 is a PRAR for the MN 215. The MN 215 selects an RAR that transmits a pilot signal of the highest SNR among the neighbor RARs 209, 211, and 213, in order to communicate with the CN 201 through the RAR. The selected RAR is the PRAR 213. Aside from the PRAR 213, there is an RAR having power equal to or greater than a threshold for the MN 215. This RAR is the SRAR 211.

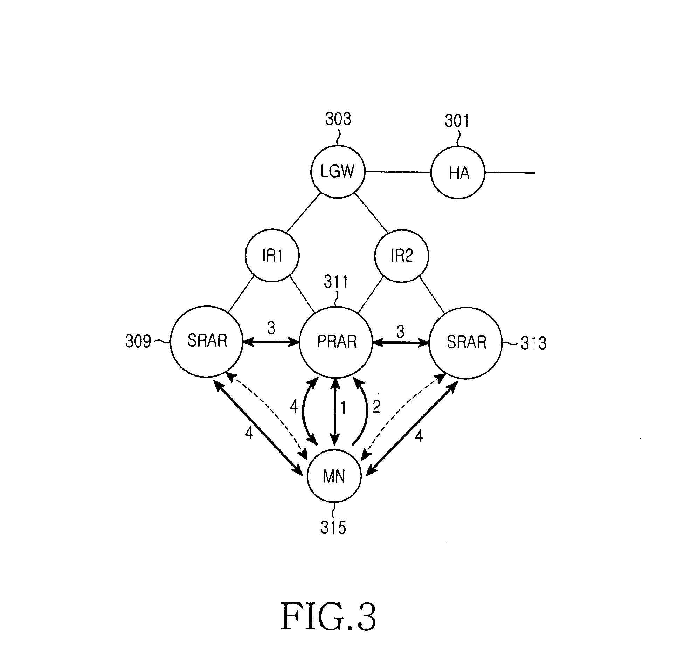

FIG. 3 illustrates an RAR selection, particularly selection of a PRAR and an SRAR in the MN during a handover according to the present invention. By selecting the PRAR and the SRAR, a handover can be performed in the uplink and the downlink.

Referring to FIG. 3, an MN 315 measures the SNRs of signals received from neighbor RARs 309, 311, and 313 and determines the RAR 311 having the highest SNR as a PRAR in step 1. The MN 315 measures the SNRs of RARs neighboring to the PRAR 311 and selects RARs 309 and 313 having SNRs equal to or greater than a predetermined threshold. The RARs 309 and 313 are SRARs. The MN 315 transmits information about the SRARs 309 and 313 to the PRAR 311 in step 2 so that the PRAR 311 gains knowledge of the SRARs 309 and 313 being sensed by the MN 315.

If the MN 315 moves, it commands the 4G access network to prepare for a handover. The PRAR 311 establishes data transmission paths between the PRAR 311 and the SRARs 309 and 313, referring to the information about the SRARs 309 and 313 received from the MN 315. The path establishment is termed tunneling. The tunneling is achieved by encapsulating a header including path information in a packet. After confirming that the SRARs 309 and 313 are connected to the PRAR 311 by the tunneling, the MN 315 transmits/receives data to/from the SRARs 309 and 313 in step 4.

A home agent (HA) 301 includes registration information about the MN 315 in the mobile communication system. The HA 301 operates similar to a GGSN (Gateway GPRS Support Node) in the 3G system, and the LGW 303 operates similar to an SGSN (Serving GPRS Support Node) in the 3G system.

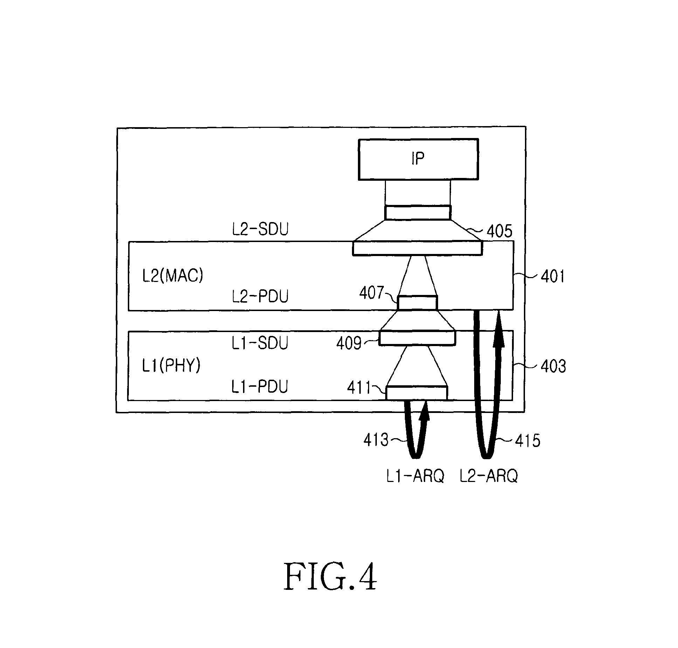

FIG. 4 illustrates ARQ interworking between a physical layer and a MAC layer according to the present invention. Referring to FIG. 4, it is noted that when errors are generated during a data transmission, retransmission can be performed in the physical layer and the MAC layer.

For conciseness, layer 1 403, which is a physical layer, is denoted by L1 and layer 2 401, which is a MAC layer, is denoted by L2. That is, L1 403 and L2 401 are defined as performing the functions of the physical layer and the MAC layer, respectively.

Because protocols corresponding to L1 403 and L2 401 are defined in an RAR in the 4G system, an ARQ-based retransmission algorithm can be performed when packet errors are generated in L1 403 and L2 401. Although when an error is generated in L2 401, a round trip delay is produced from an MN to an RNC through a Node B in the 3G system having the Node B and the RNC separated, in the present invention, the RAR takes the functions of both the Node B and the RNC and thus can perform retransmission in both L1 403 and L2 401. Due to the absence of the round trip delay, data transmission/reception can be actively performed in a real-time service.

In the 4G system of the present invention, because the RAR controls the functions of the Node B and the RNC, it is possible to perform an ARQ as a measure against packet errors, commonly in both L1 403 and L2 401. In other words, the round trip delay between the Node B and the RNC as created in the conventional 3G system is not produced in the 4G system as the functions of both L1 403 and L2 401 are incorporated in the RAR. Accordingly, methods of minimizing transmission errors in a handover by an ARQ in the L1 and L2 are performed as embodiments of the present invention, which will be described in more detail herein below.

A stepwise ARQ procedure in the protocol layers is illustrated in FIG. 4. L2 401 receives an IP packet in L2-SDUs (Service Data Units) 405 and segments each L2-SDU 405 into L2-PDUs (Packet Data Units) 407, which are suitable for processing in L1 403. From the L1's perspective, the L2-PDUs 407 received from L2 401 are L1-SDUs 409. The L1-SDUs 409 are converted to L1-PDUs 411 according to a transmission structure in L1 403. In L1 403 and L2 401, their respective ARQs are used to increase the data rates of the L1-PDUs 411 and the L2-PDUs 407.

The present invention considers an ARQ in two ways: a real-time service and a non-real-time service. The real-time service has a transmission delay limit set for each packet. As described above, each L2-PDU 407 is segmented into the L1-PDUs 411, which are transmitted on a radio channel. Therefore, when a transmission error is generated during the transmission from L1 403, a corresponding L1-PDU 411 is retransmitted, as indicated by reference numeral 413. If L2 401 fails to transmit an L2-PDU 407 within a predetermined transmission delay limit, L2 401 gives up transmitting the current L2-PDU 407 and instead, transmits the next L2-PDU 407. However, a receiver constructs the L2-PDU 407 with data received to that point, notifies that the packet has a transmission error, and retransmits the L2-PDU 407 to a higher layer, layer 3 (L3), as indicated by reference numeral 415.

In the non-real-time service, there is no transmission delay limit set for the L2-PDU 407. Therefore, L1 403 determines whether a transmitted L1-PDU 411 has errors by an ARQ signal received from a receiver. When the L1-PDU 411 has a transmission error, L1 403 retransmits it. After the retransmission, L2 401 in the receiver also determines whether the L2-PDU 407 has a transmission error. If it has a transmission error, L2 401 of the receiver transmits a NACK (Negative-Acknowledgement) signal to L2 401 of the transmitter. The transmitter then retransmits the L2-PDU 407.

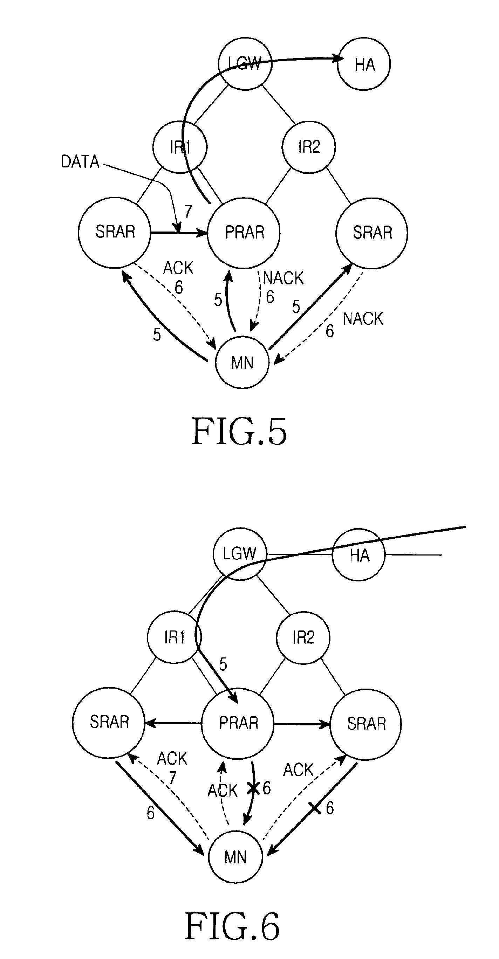

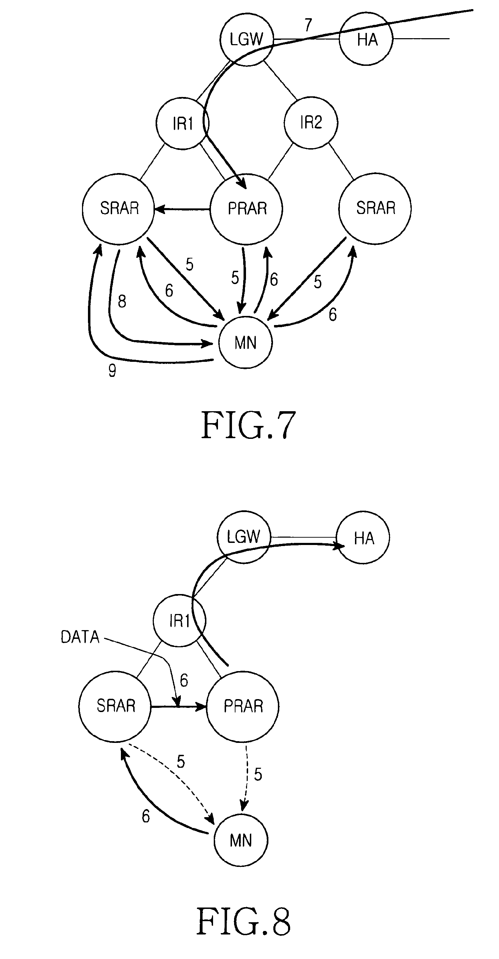

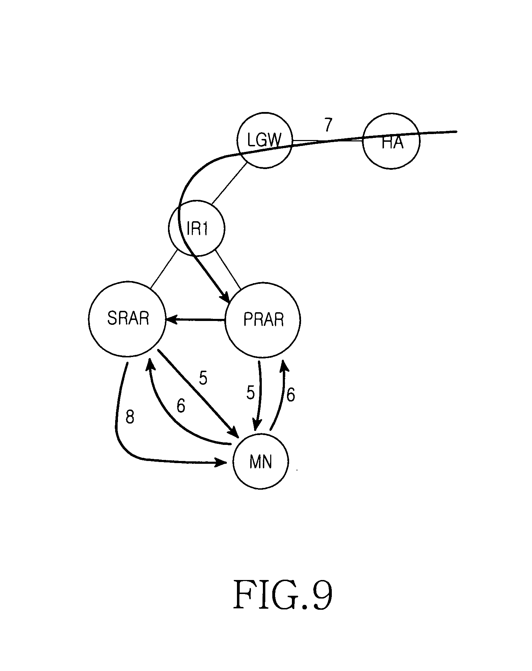

The present invention can be implemented in a number of embodiments, depending on whether data is transmitted on the uplink or downlink and whether the data is retransmitted. Data transmission/reception by an ARQ during a handover will first be described as first, second, and third embodiments of the present invention with reference to FIGs. 5, 6, and 7, respectively. This will be followed by a description of data transmission/reception without using an ARQ during a handover as fourth and fifth embodiments with reference to FIGs. 8 and 9, respectively. It is assumed herein that an SRAR and a PRAR are designated as described above with reference to FIG. 2 and tunneling is performed as described above with reference to FIG. 3 (steps 1 to 4).

### First Embodiment-Uplink Transmission by ARQ

FIG. 5 illustrates an ARQ-based uplink data transmission procedure according to an embodiment of the present invention. Referring to FIG. 5, an MN transmits packet data to a plurality of RARs in step 5. As described above, the packet data is delivered to a PRAR and SRARs on the uplink. In FIG. 5, data is transmitted to one PRAR and two SRARs.

Each RAR (PRAR or SRAR) receives the uplink packet data and notifies the MN whether the reception is normal. If the RAR receives the uplink packet normally, it transmits an ACK (Acknowledgement) signal to the MN on a predetermined downlink channel in step 6. However, if the normal reception is failed, the RAR transmits an NACK signal to the MN in step 6. In FIG. 5, only one SRAR receives the uplink packet data normally and feeds back an ACK signal, and the other SRAR and PRAR fail to receive the uplink packet data successfully and feedback an NACK signal. If the MN receives neither the ACK nor the NACK signal within a predetermined time, it preferably considers that the RARs have not received the uplink packet data normally as the MN receives the NACK signal from the RARs.

Because the data transmission was successful for one RAR, the MN transmits the next packet to the RAR without retransmitting the current packet in this embodiment of the present invention.

With tunneling established between the PRAR and the SRAR that receives the packet data normally, the SRAR transmits the received packet data to a CN through the PRAR.

The MN transmits the next packet data to the other RARs that did not receive the current packet rather than retransmit the current packet, determining that the RARs have received the current packet normally through the SRAR. Therefore, when the RARs determine that the MN has received the ACK signal, they prepare to receive the next packet.

When all RARs fail to receive the current packet and transmit the NACK signal to the MN, the MN retransmits the packet data to each RAR. The packet data can be retransmitted to all the RARs, or to only the RAR in the best channel condition (e.g., the PRAR).

The number of retransmissions of the packet is determined according to a delay boundary for real-time/non-real-time service set for the packet.

As described above, when one RAR receives the packet data normally and this RAR is the PRAR, the PRAR transmits the packet data directly to the CN. If the RAR is the SRAR, the SRAR forwards the packet data to the PRAR in step 7 and the PRAR transmits the received packet data to the CN.

In the uplink data transmission method according to the embodiment of the present invention, an MN transmits the same data to a plurality of RARs including a PRAR and SRARs. If at least one of the RARs receives the data normally, the MN does not retransmit the data. Therefore, the transmission of data to the plurality of RARs during a handover increases transmission reliability. Because there is no need for retransmission if at least one RAR receives the data normally, time delay is reduced significantly in a real-time service.

### Second Embodiment-Downlink Transmission by ARQ (1)

FIG. 6 illustrates a procedure for downlink data transmission by an ARQ according to another embodiment of the present invention. Referring to FIG. 6, packet data received from an external network through an HA, an LGW, and a first intermediate router (IR) (IR1) in step 5 is transmitted to the MN through the PRAR. The PRAR is connected to one or more SRARs by tunneling in a handover. Therefore, the PRAR forwards the received data to the SRARs. In effect, the packet data is transmitted to the MN through the PRAR and the SRARs.

More specifically, data transmitted from the CN to the PRAR is simultaneously transmitted to the MN on downlink channels through the SRARs and the PRAR, which are synchronized in step 6. As described in the first embodiment of the present invention, the number of retransmissions is determined according to a delay boundary and the number of ARQ occurrences is determined according to the retransmission number.

The MN checks for errors in the received packet data. If the MN receives the packet data normally from at least one of the RARs, there is no need to retransmit the packet data. The MN then transmits an ACK signal to all the PRAR and SRARs associated with the MN in step 7. That is, when the MN receives the packet data normally from at least one of the RARs, the MN preferably transmits the ACK signal to the RARs even if the data reception from the other RARs is failed.

In FIG. 6, the MN receives the downlink data normally from one SRAR, and the downlink data received from the PRAR and the other SRAR has errors. However, the MN transmits an ACK signal to all the RARs.

In the downlink data reception method according to the second embodiment of the present invention, an MN receives the same packet data from a plurality of RARs. Therefore, a normal reception probability increases and the number of retransmission occurrences is reduced greatly.

### Third Embodiment-Downlink Transmission by ARQ (2)

FIG. 7 illustrates a procedure for downlink data transmission by an ARQ according to another embodiment of the present invention. Referring to FIG. 7, packet data received from an external network through the HA, the LGW, and IR1 is transmitted to the MN through an RAR in the best channel condition among a plurality of RARs. The MN calculates the SNRs of pilot signals received from the PRAR and the SRARs in a handover in step 5, and selects an RAR having the highest SNR and reports the selection to the RARs in step 6.

The PRAR, which has received packet data for the MN from the CN, forwards the packet data to the selected RAR in step 7. The selected RAR transmits the packet data to the MN on the downlink in step 8.

The MN then checks for errors in the received packet data. If the packet data is normal, the MN transmits an ACK signal to the selected RAR in step 9. However, if the packet data has errors, the MN transmits an NACK signal to the selected RAR in step 9.

The downlink data transmission method according to the third embodiment of the present invention is efficient for a high data rate.

The uplink and downlink data transmission methods illustrated in FIGs. 5, 6, and 7 are based on an ARQ. Herein below, uplink and downlink data transmission methods without using an ARQ will be described in connection with FIGs. 8 and 9.

Fourth Embodiment-Uplink Transmission Without ARQ

FIG. 8 illustrates a procedure for uplink data transmission without using an ARQ according to another embodiment of the present invention. Referring to FIG. 8, the MN evaluates the channel conditions of the RARs by measuring the SNRs of pilot signals received from the RARs in step 5. Then, the MN transmits packet data including information indicating an RAR in the best channel condition to the RARs. Although each of the RARs receives the packet data form the MN on the uplink, it processes the received packet data only if the information indicates the RAR as the RAR in the best channel condition. Therefore, the RAR neglects the packet data if the information indicates a different RAR. Accordingly, the MN virtually transmits the packet data to the RAR in the best channel condition.

If the RAR in the best channel condition is the PRAR, the PRAR transmits the received packet data directly to the CN. If the RAR in the best channel condition is an SRAR, the SRAR forwards the received packet data to the PRAR and the PRAR in turn transmits the packet data to the CN.

### Fifth Embodiment-Downlink Transmission Without ARQ

FIG. 9 illustrates a procedure for downlink data transmission without using an ARQ according to another embodiment of the present invention. Referring to FIG. 9, the MN evaluates the channel conditions of the RARs by measuring the SNRs of pilot signals received from the RARs in step 5, and reports an RAR in the best channel condition to the RARs in step 6.

When packet data is directed from the CN to the MN, the packet data is first transmitted to the PRAR in step 7. The PRAR forwards the packet data to the RAR in the best channel condition. If the PRAR is in the best channel condition, it transmits the packet data directly to the MN. However, if an RAR other than the PRAR (e.g., an SRAR) is in the best channel condition, the PRAR forwards the packet data to the RAR in the best channel condition. The RAR in the best channel condition transmits the packet data to the MN in step 8.

As described above, exactly how a handover (soft handover and hard handover) is implemented is yet to be standardized for a 4G network that is currently under discussion. If a transmission error can be reduced by 3dB or higher by a handover technique, the resulting benefit circumvents the constraint of additional hardware or software implementation, which may be necessary.

Therefore, the present invention provides handover methods when there are no specified handover techniques for the 4G network. Data transmission according to the present invention minimizes transmission errors with respect to a given channel capacity and thus maximizes an effective data rate.

In accordance with the present invention as described above, a soft handover gain of 1 to 4dB can be expected from the combination of a soft handover and a retransmission scheme for the 4G system. Additionally, QoS is ensured and a cell radius can be increased, thereby making it possible to deign an economical network.

While the present invention has been shown and described with reference to certain preferred embodiments thereof, it will be understood by those skilled in the art that various changes in form and details may be made therein without departing from the scope of the present invention as defined by the appended claims.

## Claims

1. A method of transmitting data from a mobile node to a core network through at least one intermediate router in a wideband radio access network system where the mobile node is wirelessly connected to the core network through a first intermediate router and a second intermediate router neighboring the first intermediate router is tunneled to the first intermediate router, comprising the steps of:
transmitting data from the mobile node to the first intermediate router and the second intermediate router; and
if at least one of the first and second intermediate routers receives the data normally, transmitting the received data to the core network through the first intermediate router by the at least one of the first and second intermediate routers.

2. The method of claim 1, wherein the first intermediate router has a best channel condition for the mobile node among the first and second intermediate routers.

3. The method of claim 1, wherein the second intermediate router has a best channel condition among intermediate routers neighboring the first intermediate router.

4. The method of one of claims 1 to 3, further comprising the step of, if the at least one of the first and second intermediate routers fails to receive the data normally, retransmitting the data to the at least one of the first and second intermediate routers by the mobile node.

5. The method of one of claims 1 to 4, wherein the intermediate routers process retransmission in a physical layer and a MAC layer.

6. A method of transmitting data from a core network to a mobile node through at least one intermediate router in a wideband radio access network system in which the mobile node is wirelessly connected to the core network through a first intermediate router and a second intermediate router neighboring the first intermediate router is tunneled to the first intermediate router, comprising the steps of:
transmitting data from the core network to the first intermediate router;
transmitting the data from the first intermediate router to the mobile node;
forwarding the data from the first intermediate router to the second intermediate router; and
transmitting the data from the second intermediate router to the mobile node.

7. The method of claim 6, wherein the first intermediate router has a best channel condition for the mobile node among the first and second intermediate routers.

8. The method of claim 6, wherein the second intermediate router has a best channel condition among intermediate routers neighboring the first intermediate router.

9. The method of one of claims 6 to 8, wherein the first intermediate router and the second intermediate router simultaneously transmit the data to the mobile node.

10. The method of one of claims 6 to 9, further comprising the step of, if the mobile node receives the data from at least one of the first and second intermediate routers, reporting normal reception of the data from the mobile node to both the first intermediate router and the second intermediate router.

11. A method of transmitting data from a core network to a mobile node through at least one intermediate router in a wideband radio access network system in which the mobile node is wirelessly connected to the core network through a first intermediate router and a second intermediate router neighboring the first intermediate router is tunneled to the first intermediate router, comprising the steps of:
measuring channel conditions of the first and second intermediate routers from signals received from the first and second intermediate routers by the mobile node;
reporting the channel conditions from the mobile node to the first and second intermediate routers;
transmitting data from the core network to the first intermediate router;
forwarding the data from the first intermediate router to an intermediate router in the best channel condition; and
transmitting the data from the intermediate router in the best channel condition to the mobile node.

12. The method of claim 11, wherein the first intermediate router is the intermediate router in the best channel condition for the mobile node.

13. The method of claim 11, wherein the second intermediate router is the intermediate router in the best channel condition.

14. The method of one of claims 11 to 13, wherein the step of measuring the channel conditions of the first and second intermediate routers comprises the step of measuring signal to noise ratios of pilot signals received in the mobile node from the first and second intermediate routers.

15. The method of one of claims 11 to 14, further comprising the step of transmitting a signal indicating a reception result of the data from the mobile node to the intermediate router in the best channel condition.

16. A method of transmitting data from a mobile node to a core network through at least one intermediate router in a wideband radio access network system in which the mobile node is wirelessly connected to the core network through a first intermediate router and a second intermediate router neighboring the first intermediate router is tunneled to the first intermediate router, comprising the steps of:
measuring channel conditions of the first and second intermediate routers from signals received from the first and second intermediate routers by the mobile node; and
transmitting data including information indicating an intermediate router in a best channel condition from the mobile node to the first and second intermediate routers.

17. The method of claim 16, wherein the first intermediate router is the intermediate router in the best channel condition for the mobile node.

18. The method of claim 16, wherein the second intermediate router is the intermediate router in the best channel condition.

19. The method of one of claims 16 to 18, further comprising the step of transmitting the received data from the intermediate router in the best channel condition to the core network.

20. The method of one of claims 16 to 19, wherein the step of measuring the channel conditions of the first and second intermediate routers comprises the step of measuring signal to noise ratios of pilot signals received from the intermediate routers by the mobile node.
